# EUROPEAN PATENT APPLICATION

(11) **EP 4 825 813 A1**
(43) Date of publication of application: **21.10.2026**
(21) Application number: 25382400.7
(22) Date of filing: 16.04.2025
(51) Int. Cl.: C02F 1/30, C02F 11/15, C02F 11/127, C02F 103/20

(54) **PROCESS FOR TREATING SLURRY THROUGH LASER TECHNOLOGY**

(71) Applicant: Universitat Jaume I, 12006 Castelló de la Plana (ES)
(72) Inventor: CARDA CASTELLÓ, Juan Baustista, 12006 Castelló de la Plana (ES); FRAGA CHIVA, Diego, 12006 Castelló de la Plana (ES); CADENA BAREÑO, Robinson, 12006 Castelló de la Plana (ES); TOCA VALERO, Santiago, 12006 Castelló de la Plana (ES)
(74) Representative: Ungria López, Javier

(57) **Abstract**

A method for the treatment and valorization of slurry, which involves subjecting this slurry to infrared laser irradiation at a wavelength between 780 nm and 25 µm under specific parameters and a controlled atmosphere. This achieves value-added products, such as carbon-based (graphenic) materials and useful gases, such as syngas. In a preferred embodiment, the slurry undergoes physical separation, obtaining, on one hand, a solid phase, which is irradiated with infrared laser as previously described; and a liquid phase, which can also be treated separately through ultraviolet irradiation, with the purpose of degrading organic matter, eliminating pathogenic microorganisms, removing or reducing odors, decreasing nitrates, eliminating pharmaceutical residues, and clarifying this phase for reuse in agricultural or industrial applications. In any of its alternatives, the entire slurry flow or its phases are conditioned and subjected to agitation for homogeneous treatment.

## Description

### OBJECT OF THE INVENTION

The invention falls within the technical field of Chemistry and the environmental sector, specifically in wastewater treatment, and more precisely in the purification of animal waste, such as slurry, using laser technology. It is also aimed at the valorization of this waste through the generation of high-value compounds within the framework of a circular economy.

### BACKGROUND OF THE INVENTION

Currently, slurry, which is the liquid formed by animal urine and what seeps from manure, represents a serious environmental problem, especially slurry from pig farming. First, the excess of this waste contaminates available water sources (mainly aquifers), increasing the content of organic load and causing eutrophication. At the same time, this waste carries a significant bacterial load, pharmaceutical residues, and harmful chemicals that can contaminate these water sources, causing damage to aquatic ecosystems and to humans who may potentially use these water resources.

Regarding the impact on soil quality, the application of slurry, especially from pigs, can affect the pH balance of the soil. Slurry is often alkaline, and its use can increase the alkalinity of the soil. This can be problematic in areas where the soil is already alkaline, negatively affecting nutrient availability for plants. It can also influence the soil's ability to retain water, which may lead to soil compaction or, conversely, the formation of runoff channels. This affects the soil's ability to provide a favorable environment for plant growth and increases the risk of aquifer contamination.

Improper management of slurry also contributes to the emission of greenhouse gases, such as methane (CH₄) and nitrous oxide (N₂O), which have a high global warming potential. These gases not only contribute to climate change but also impact air quality, affecting human health and surrounding ecosystems.

For these reasons, the efficient management of slurry is considered of great importance to local and national authorities. The growing need to mitigate the environmental risks posed by these animal waste products has sparked scientific interest in finding disruptive solutions.

Currently, various techniques and procedures exist to address the contamination problems generated by slurry excess. Most of these techniques are based on the application of physicochemical treatments to separate slurry into solid and liquid phases for further purification treatment, aiming to achieve results that can be useful. For example, Spanish patent ES 2157779 details a procedure for the purification and drying of slurry through anaerobic biological digestion and the production of biogas. Patent No. ES 2223295, on the other hand, describes a purification procedure that produces ammonium salts applicable as mineral fertilizers, liquid slurry free of nitrogen, and biogas.

Other procedures aim to disinfect slurry in order to purify the liquid phase and present alternatives for the reuse of wastewater. For instance, patent No. ES 2108658 presents a biological process for purifying liquid waste with high contaminant and toxicity levels, particularly from slurry. Similarly, patent ES 2157773 protects a method for disinfecting pig slurry and removing nitrogen compounds by stripping ammonia nitrogen.

The integration of technology with physicochemical procedures for slurry treatment is varied. However, regarding the present invention, the use of laser technology has been mainly limited to the extraction of materials by integrating other components, wastewater treatment, and the emission of low-potency gases. Below are some inventions and research results demonstrating the integration of technology with physicochemical procedures for slurry treatment.

Luo and Liu, et al. (2022), present results from calcium titanate compounds integrated with reduced graphene oxide (CTO/rGO), prepared by the pulsed laser ablation in liquid (PLAL) technique, demonstrating the potential to remove organic contaminants from wastewater. Antolini and Spellman, et al. (2022), demonstrate improved mechanical understanding of the formation and fate of Fe(V) and Fe(IV), accelerating the development of new advanced oxidation processes for water treatment applications.

Patent ES 2678079 B2 describes a procedure for obtaining graphene-based materials from sludge obtained in wastewater treatment. It refers to a process for obtaining graphene materials consisting of defective graphenes containing dopant heteroatoms and graphene materials with metal nanoparticles supported on these sheets via pyrolysis in the absence of oxygen from sludge originating from municipal or industrial wastewater treatment plants with a high organic content.

Patent US2022153639 A1 describes a method for producing a conductive fiberglass mesh with laser-induced graphene coating. International patent application No. WO/2019/138143 presents a method for obtaining a graphene nanomesh, which includes irradiating a graphene surface with ultrafast laser radiation.

Patent CN116199210 A refers to a method for high-flow laser synthesis and application of graphene-loaded nanoparticles, belonging to the technical field of nanomaterials and electrochemistry. Patent CN112723855 A demonstrates a preparation method for laser etching and application of a matrix of graphene ceramic electrodes, obtaining an in-situ matrix of graphene ceramic electrodes with certain mechanical resistance and hydrophobicity.

Li, Ren, Zhao, & Takarada (2018) show their results regarding the production of H₂ and high-performance syngas from the catalytic cracking of pig manure and compost pyrolysis steam over Ni-based catalysts. Abdelsalam and Abdelsalam, et al. (2019) show the use of laser radiation to photobiostimulate methanogenic bacteria to increase biogas and methane production from anaerobic digestion (AD) of livestock manure, highlighting its environmental impact.

Aduev and Kraft, et al. (2023), show the possibility of producing hydrogen through the oxidation of aluminum nanoparticles suspended in water by laser pulses.

In conclusion, after a preliminary search in patent databases and academic articles, no documents have been found that explicitly and directly address the treatment of slurry to obtain high-value-added materials while also purifying the water from these slurries and other wastewater for potential recycling.

Unlike the previous teachings, the present invention addresses a process for valorizing slurry from a broader perspective using laser technology. The process involves obtaining high-value carbon-based products, generating energy from the solid or semisolid phase of the slurry, and purifying the aqueous phase through clarification and the elimination of pathogenic microorganisms using this technology.

### Cited documents

### Patents

ES 2157773 B1 (ROS ROCA, S.A.) 29.01.2002 Procedimiento para la higienización del purin de cerdo y la eliminación de compuestos nitrogenados por arrastre del nitrógeno amoniacal.
ES2108658 A1 (ROS ROCA, S.A.) 16.12.1997 Biological process for purifying liquid residues with high contaminating content and/or high toxicity, particularly liquid manures and dregs of oil.
ES2223295 (SERVICIOS DE GESTIÓN TECNOLÓGICA, S.A.) 16.02.2005 Procedimiento para la depuración de purines.
ES2678 079 B2 (DEPURACIÓN DE AGUAS DEL MEDITERRÁNEO, S.L.) 10.03.2020 Procedimiento de obtención de materiales grafénicos a partir de fangos procedentes del tratamiento de aguas residuales.
US2022153639 A1 - (CHONGQING INSTITUTE OF EAST CHINA NORMAL UNIV; ROI OPTOELECTRONICS TECH CO LTD; UNIV EAST CHINA NORMAL) 022-05-19 Method and device for producing conductive glass fiber mesh with laser induced coating graphene
WO/2019/138143 (ASOCIACIÓN DE INVESTIGAClÓN METALÚRGICA DEL NOROESTE), 18.07.2019 Method for obtaining a graphene nanomesh
CN116199210 A -(UNIV NORTHWESTERN POLYTECHNICAL) 2023-06-02 High-flux laser synthesis method and application of graphene-loaded nanoparticles
CN112723855 A - (UNIV WUHAN) 2021-04-30 Laser engraving preparation method and application of graphene-ceramic composite electrode array

### Articulos

Luo, P., Liu, W., Zhu, D., Sun, B., Cao, Y., & Wang, Y. (2022). One-step synthesis of Ti3+ self-doped CTO/rGO composites by pulsed laser ablation in liquid with enhanced photocatalytic activity in water purification. Colloids and Surfaces A: Physicochemical and Engineering Aspects, 655, 130216. https://doi.org/https://doi.org/10.1016/j.colsurfa.2022.130216
Antolini, C., Spellman, C. D. J., Otolski, C. J., Doumy, G., March, A. M., Walko, D. A., Liu, C., Zhang, X., Young, B. T., Goodwill, J. E., & Hayes, D. (2022). Photochemical and Photophysical Dynamics of the Aqueous Ferrate (VI) lon. Journal of the American Chemical Society, 144(49), 22514-22527. https://doi.org/10.1021/jacs.2c08048
Li, W., Ren, J., Zhao, X. Y., & Takarada, T. (2018). H2 and Syngas Production from Catalytic Cracking of Pig Manure and Compost Pyrolysis Vapor over Ni-Based Catalysts. Polish Journal of Chemical Technology, 20(3), 8-14. https://doi.org/10.2478/pjct-2018-0032
Abdelsalam, E., Hijazi, O., Samer, M., Yacoub, I. H., Ali, A. S., Ahmed, R. H., & Bernhardt, H. (2019). Life cycle assessment of the use of laser radiation in biogas production from anaerobic digestion of manure. Renewable Energy, 142, 130-136. https://doi.org/https://doi.org/10.1016/j.renene.2019.04.090
Aduev, B. P., Kraft, Y. V, Nurmukhametov, D. R., Belokurov, G. M., Nelubina, N. V, & Ismagilov, Z. R. (2023). Hydrogen production by oxidation of aluminum nanopowder in water under the action of laser pulses. International Journal of Hydrogen Energy, 48(59), 22484-22494. https://doi.org/https://doi.org/10.1016/j.ijhydene.2023.03.096
Natasha Vermeulen et al., "The Bactericidal Effect of Ultraviolet and Visible Light on Escherichia coli", Biotechnology & Bioengineering (2008), 99, 3, 550-556.

### Thesis

Jaafar, Weaam (2015) Laser decontamination and detection of bacteria and microalgae. University of Glasgow. PhD thesis. https://theses.gla.ac.uk/6172/Copyright

### DESCRIPTION OF THE INVENTION

The invention relates to a process for the treatment and valorization of slurry through the use of laser technology. The process comprises irradiating the slurry with infrared laser to obtain carbonaceous and/or graphene materials from the solid or semi-solid part it contains, and, secondarily, gases of interest, such as synthesis gases (SynGas).

However, notwithstanding the above, a preferred embodiment of the process is one in which, prior to infrared laser irradiation, the solid or semi-solid part of the slurry is separated from the liquid phase, for example, by density gradient. In this way, it is the isolated solid phase that undergoes infrared laser treatment. And as for the separated liquid phase, the process may include an additional step of irradiating said liquid phase with ultraviolet laser to degrade organic matter, eliminate pathogenic microorganisms, remove or reduce odors, decrease nitrates, eliminate pharmaceutical residues, and clarify this phase for potential reuse in agricultural or industrial applications.

Thus, the slurry treatment process described in claim 1 includes:
- subjecting a flow of slurry to infrared laser irradiation; wherein the infrared, photothermal irradiation is carried out for a time ranging between 30 and 90 minutes, with a wavelength between 780 nm (NIR, near infrared) to 25 µm (MIR, mid infrared), at a power greater than 20 watts, a pulse frequency greater than 1 kHz, and a scanning speed greater than 10 mm/s.

In the context of the present invention, the described intervals include both limits.

Preferably, the flow of slurry in irradiated under stirring, more preferably between 30 and 1000 rpm, depending on the viscosity.

In a preferred case, the process includes a pre-stage before the laser irradiation to separate the aqueous phase and the solid and/or semi-solid phase of the slurry. This separation process is carried out using conventional methods such as centrifugation or extrusion. Once both phases are obtained, the solid or semi-solid phase is treated in the same manner as previously described, i.e. with infrared laser irradiation under the conditions outlined. However, in this case, stirring would not be necessary since we have a solid or semi-solid phase. As for the liquid or aqueous phase, an embodiment of the process comprises treating the liquid or aqueous phase, with ultraviolet laser irradiation under stirring between 30 and 1,000 rpm. The liquid phase treatment is carried out with a UV laser having a wavelength between 260 and 540 nm, with the treatment time ranging from 30 seconds to 30 minutes, at a pulse frequency of less than 200 kHz, at a power of more than 1.7 watts, and at a scanning speed between 10 and 10,000 mm/s.

To measure the parameters defined in the present invention, a mini magnetic stirrer LBX H01, 2 L was used, wherein different revolutions within the specified range were tested; and a UV laser with a resonator SEAL-355-15S (see example).

The infrared irradiation stage is preferably carried out under controlled conditions, for example, in an inert atmosphere, so that the reducing capability of the laser takes effect. This atmosphere is achieved by generating a continuous vacuum in a chamber and filling it with an inert gas such as argon or nitrogen. The laser, on its own, has reducing capabilities; but in the presence of a considerable amount of oxygen (21% in the atmosphere), spontaneous combustion could occur due to the infrared. Thanks to this preferred embodiment, wherein the oxygen presence is limited, this risk is reduced. Practically, although not limiting, the chamber or space where the irradiation process is carried out may have two inlets, one connected to a vacuum pump, and another connected to inert gas injection means. To apply this vacuum atmosphere, it would be enough, for example, to apply the vacuum and the inert gas injection simultaneously in the chamber for 1 minute before irradiation.

In a particular embodiment of this preferred process, the solid and/or semi-solid phase previously separated is subjected to drying before being irradiated with the infrared laser. Optionally, this solid phase, in addition to being dried, may also be mechanically treated, for example, pressed or pelletized.

The described process, in any of its alternatives (whether with pre-phase separation or without it, i.e., with irradiation of the full slurry flow) allows for the obtaining of a series of value-added products, such as carbonaceous products (including graphene) along with synthesis gases. On the other hand, in the preferred embodiment where solid/liquid phase separation is carried out before laser treatment, the liquid phase of the slurry is also separately treated with laser, in this case, ultraviolet radiation, obtaining purified water suitable for industrial or agricultural reuse.

Thus, the technical effect of the infrared laser radiation treatment of the full slurry or, alternatively, the solid and/or semi-solid phase separated from the slurry, is the transformation of organic matter, decreasing and/or eliminating contaminants such as heavy metals, sulfides, nitrates, phosphates, etc., and generating carbonaceous and/or graphene materials, as well as generating gases of interest, such as synthesis gases (biogas CO + H2, CH4, or CO2, among others).

Also, the technical effect of the ultraviolet laser radiation treatment of the liquid phase separated from the slurry is the purification of the wastewater, as it degrades or reduces organic contaminants (such as organic matter or pharmaceutical residues), reduces nitrates, reduces odors, and eliminates pathogenic microorganisms present in the aqueous solution. This water is suitable for industrial or agricultural use.

### Brief description of the figures

**Figure 1****.** Flowchart of the processes/stages of the invention.
**Figure 2****.** IR spectrum for characterizing the manure sample from Example 1, before being irradiated (2.a). B. after being irradiated (2.b) with the process of the present invention.
**Figure 3****.** Infrared spectrum of graphene oxide (GO) with FT-IR (extracted from: São José dos Campos, 2018). Synthesis of Graphene Oxide and Functionalized CNT Nanocomposites Based on Epoxy Resin. J. Aerosp. Technol. Manag. vol. 10. Epub July.
**Figure 4****.** SEM micrograph of the irradiated sample.
**Figure 5****.** SEM micrograph of the non-irradiated sample from Example 1.
**Figure 6****.** EDX micrograph of the irradiated and non-irradiated sample from Example 1.
**Figure 7****.** Bar chart showing the qualitative analysis by mass spectrometry of the gases emitted during irradiation of Example 1.
**Figure 8****.** UV spectrum of the aqueous phase of the slurry after irradiation for 30, 60, and 90 minutes, compared to the non-irradiated sample (0') from Example 2. a, normal graph, b, ampliated graph.
**Figure 9****.** Absorbance graphs of the different organic compounds analyzed in Example 3. a, Methyl orange, b, Congo red, c, Rhodamina B, d, Ciprofloxacin, e, Amoxiciline, f, Diclofenac, g, Dexametasone, h, Ibuprofen, i, Paracetamol.

### Detailed description of the invention

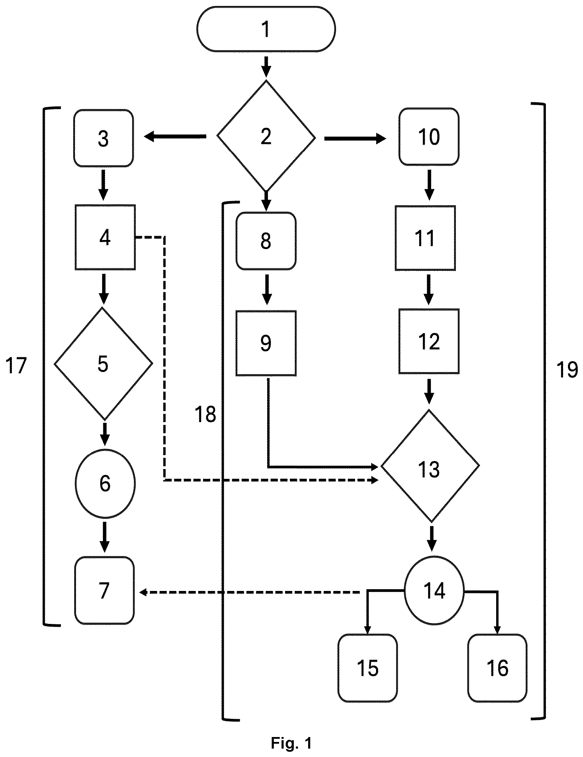

In Figure 1, the process referred to in the present invention is detailed, in its multiple alternatives. Thus, the essential process allows for the treatment of the slurry (1) directly through infrared laser radiation (18), without prior phase separation, or, in a preferred embodiment, to perform a prior phase separation (2) and treat the two phases more efficiently: aqueous (3), through water purification action (17), and solid or semisolid (10), through transformation and contaminant removal action (19).

In the essential and simplest treatment route, the slurry is not divided, and it directly passes as a semisolid fluid mass (8). Preferably, is homogenized (9) by agitation for subsequent treatment with infrared laser in a controlled atmosphere (13).

In the preferred embodiment, prior to the infrared laser radiation (18), the separation (2) of the two phases, aqueous (3) and solid and/or semisolid (10), is carried out using any conventional mechanical means, such as centrifugation, extrusion, etc. Each of the two phases (3, 10) is exposed to a separate treatment with laser radiation from different equipment (5, 13). Regarding the solid/semisolid phase (10), a drying process (11) is applied after separation, and it is then pressed or pelletized (12), before subjecting it to infrared laser radiation (19).

The treatment with infrared laser radiation, whether on the whole slurry, directly (18), or on the separated solid and/or semisolid phase (19), is carried out in a controlled atmosphere, inside an air chamber with an inert or slightly reducing atmosphere with argon, nitrogen, or other gases with these characteristics, under the previously mentioned conditions (13). During this process, organic matter is transformed, producing carbonaceous and/or graphenic materials (15), and a reduction and/or removal of contaminants such as heavy metals, sulfides, nitrates, phosphates, pharmaceutical residues, or the like, occurs. Additionally, during infrared laser irradiation (13), a gas mixture (synthesis gas: CO + H2) is produced, which can be reuse as a source of green energy (16). It is advisable to characterize the obtained materials and gases as quality proof (14), if needed.

Regarding the aqueous phase (3), radiation is applied with an ultraviolet laser system (5). Prior to irradiation, this phase must be homogenized or agitated (4) to ensure that the radiation is applied uniformly and thoroughly to the solution. During this stage, organic matter contained in the aqueous solution is degraded, along with the reduction of nitrates, removal of pharmaceutical residues, and microorganisms, at a low temperature, without reaching the boiling point of water, i.e., below 100°C (6), although experimentally it is usually equal to or less than 60°C. With this treatment, the water is purified for potential agricultural or industrial use (7).

### EXAMPLES

### Example 1. Applied methodology and results achieved at the laboratory scale: treatment of solid or semisolid phase of slurry according to the present invention.

First of all, it should be noted that no significant differences were found when irradiating the slurry without prior phase separation or after separating and irradiating the solid fraction with infrared laser radiation. Therefore, this example explains the process with phase separation.

The slurry collected from farms, which is commonly in the form of a heterogeneous semisolid suspension, was subjected to phase separation. It was placed in centrifuge tubes, calibrated by weight, and centrifuged preferably at 10,000 rpm for 10 minutes. Under these conditions, separation by density was achieved, resulting in two phases: a solid phase and an aqueous phase.

Regarding the solid phase, it was dried at 60°C for 16 hours and, once dry, it was ground to obtain a powder, with which compacted pellets were later made. However, it is also possible to irradiate the slurry "fresh", without prior drying treatment. The results presented and discussed in this document are those resulting from the treatment of the solid phase of the slurry in the form of a pressed pellet. The pellet is placed in a borosilicate vial and irradiated with a 1064 nm infrared laser, using a YDFLP-120W-M7-M-R resonator, with the active medium being a fiber. The following parameters were used for irradiation: beam speed of 10,000 mm/s, power of 25 watts, frequency of 1000 kHz, and pulse duration of 10 nanoseconds.

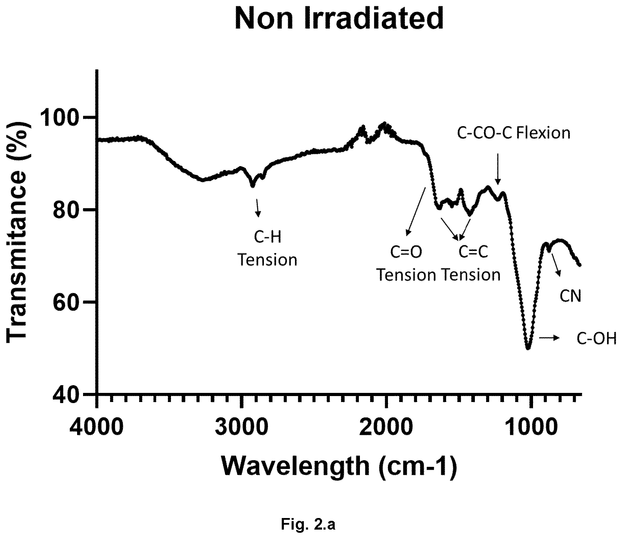

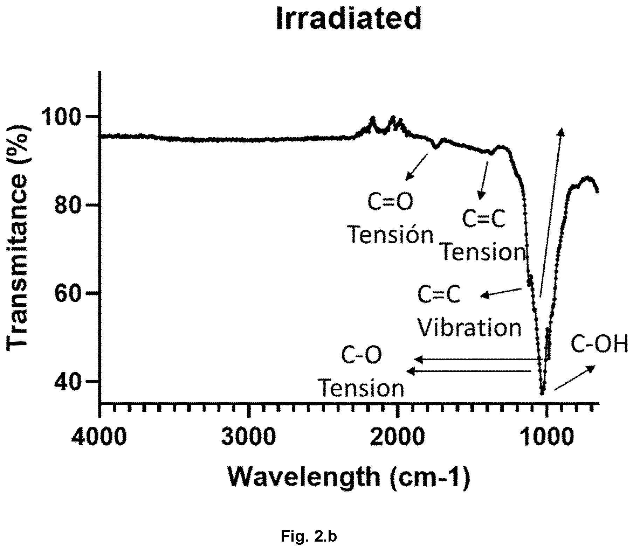

Thanks to infrared spectroscopy (FTIR), it can be observed in the characterization stage that the carbon-hydrogen bonds (usually hydrogen bonds with water) were removed, as well as the bonds from the carboxyl group, including the nitrogen-containing groups, and changes were recorded in the carbon-carbon and carbon-oxygen bonds. These findings are shown in Figure 2.

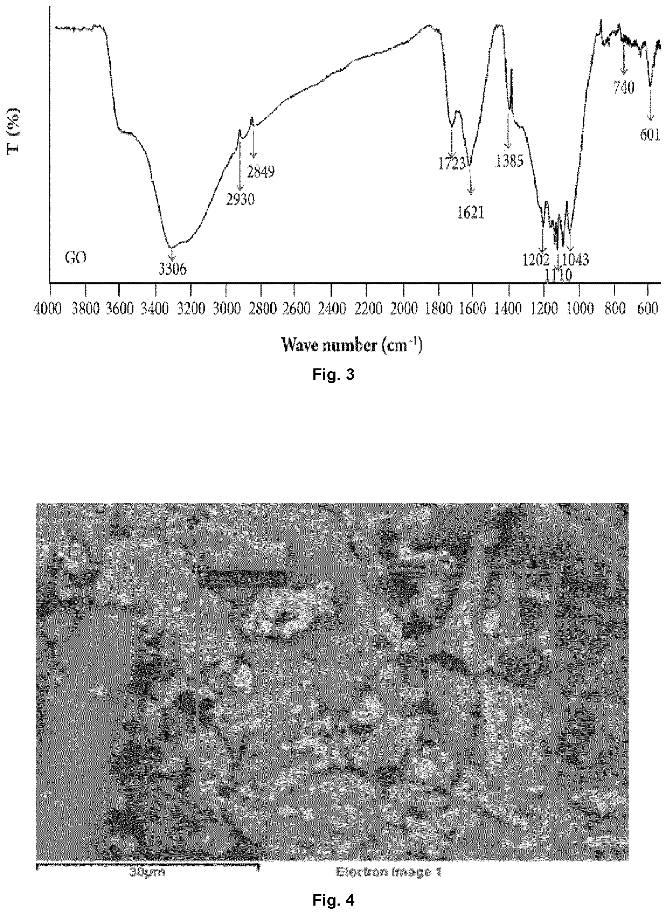

In Figure 3, the infrared spectrum of graphene oxide can be observed, where similarities can be noted in the irradiated sample illustrated in Figure 2. With the obtained results, it can be stated that the irradiated slurry sample contains carbon bonds related to graphene oxide.

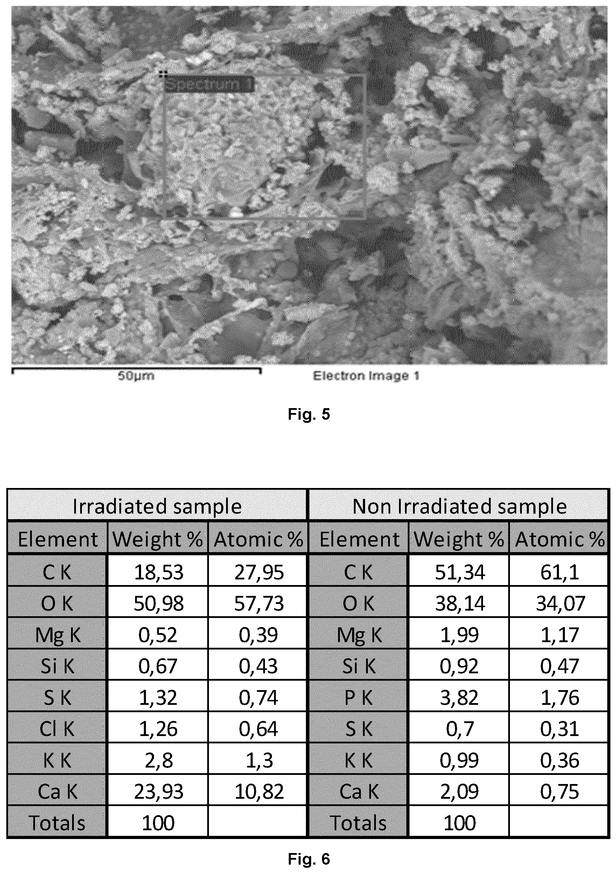

It should be emphasized that the products obtained have also been analyzed using Scanning Electron Microscopy (SEM) and X-ray Spectroscopy (EDX). With these analyses, areas of fusion and greater homogeneity in the irradiated sample (Figure 4) were observed, compared to the non-irradiated sample (Figure 5). Additionally, the removal of phosphate compounds and a decrease in other potential contaminants were observed in the X-ray Spectroscopy (EDX) of the irradiated sample compared to the non-irradiated one (Figure 6).

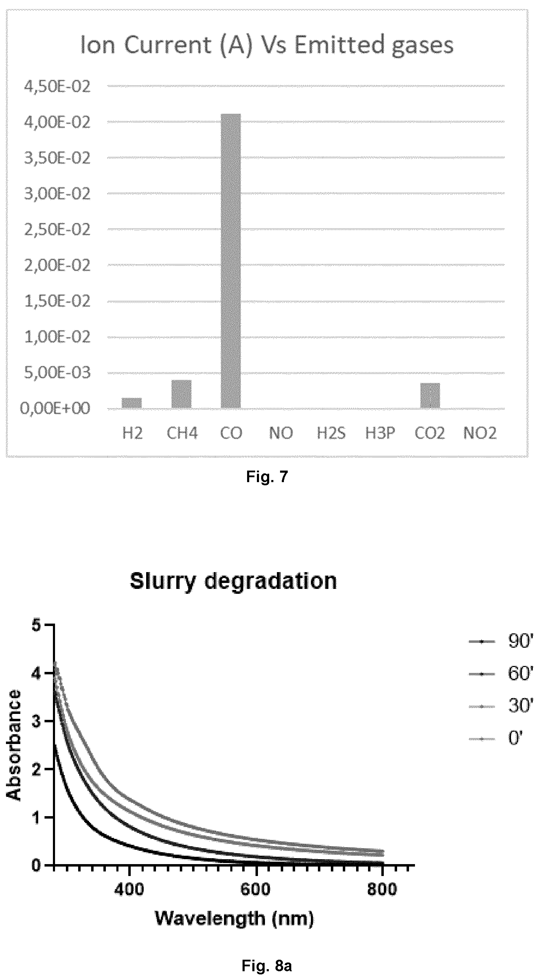

Notwithstanding the previous results, the gas obtained during irradiation was also analyzed using mass spectrometry, predominantly yielding CO (carbon monoxide), followed by CH₄ (methane), CO₂ (carbon dioxide), and H₂ (hydrogen) (Figure 7). It should be noted that CO and H₂ are of great interest as synthesis gases, being high-value-added products. The generated CH₄ can also be used as a potential biogas.

### Example 2. Applied methodology and results achieved at the laboratory scale: treatment of the liquid or aqueous phase separately according to the present invention.

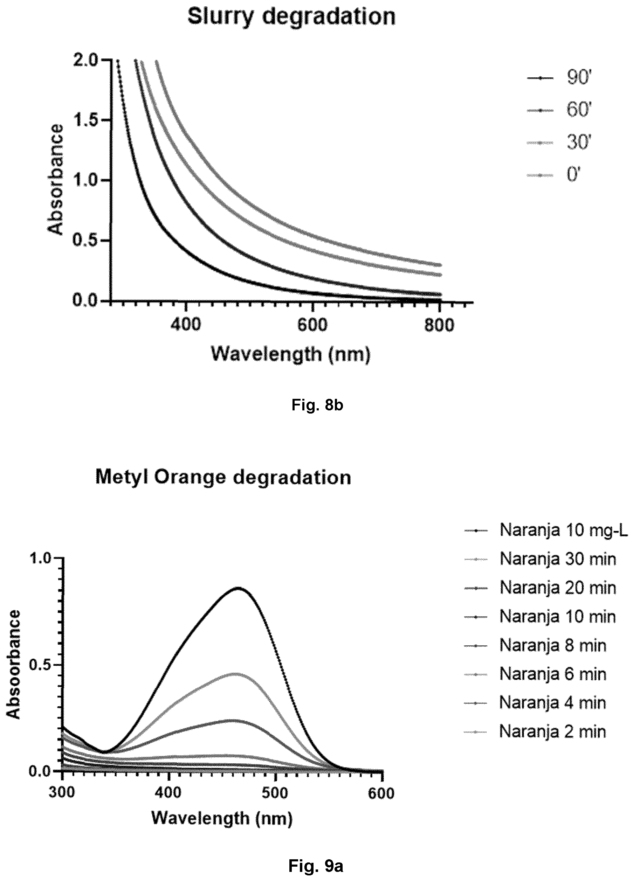

In the experimentation with the aqueous phase separated from the rest of the slurry, the fraction of interest from the slurry was introduced into a 3 ml vial and irradiated with a UV laser, SEAL-355-15S resonator, with a wavelength of 355 nm. This sample was continuously agitated during irradiation, and the point of maximum irradiance (focus) of the laser was the lower part of the vial where the sample was located. The radiation was performed in intervals of 30 minutes up to 90 minutes, with the following parameters: 1000 mm/s, 3.6 W, and 20 kHz. In Figure 8, the degradation of the organic matter is observed through the decrease in absorbance with the UV laser treatment under the described experimental conditions.

In addition to these absorbance measurements for the irradiated and non-irradiated aqueous phase of the slurry, a microbiological analysis was also performed on the irradiated slurry sample for 90 minutes, analyzing the total number of bacteria, as well as pathogenic bacterial groups such as Coliforms and Enterococci. It should be noted that the temperature at the end of the irradiation was 55°C. As seen in Table 1, a drastic decrease in total bacteria and a complete reduction of pathogenic bacteria were recorded in the irradiated sample. It is important to note that the sterility in the process after irradiation was not fully optimal, due to practical reasons and laboratory conditions, so there could have been contamination after irradiation, suggesting that the results could have been even better, potentially achieving the complete elimination of bacteria under more controlled conditions.

**Table 1. Summary of the bacterial presence analysis in the irradiated and non-irradiated aqueous slurry samples with the UV laser**

| **Bacterial group (according to selective media used)** | | **Bacterial population (CFU/mL)** | |
|---|---|---|---|
| | | **Non irradiated** | **Irradiated** |
| Coliforms (non-coliform enterobacteria) | | 1,58E+04 | 0 |
| Total Enterococci | | 5,60E+04 | 0 |
| | *E. fecalis* | 4,35E+04 | 0 |
| | *E. faecium* | 1,25E+04 | 0 |
| Total bacteria | | 2,26E+06 | 4,05E+03 |

### Example 3. Application of the methodology of the present invention to potential contaminants present in slurry in the aqueous phase.

In addition to experiments conducted with the aqueous and solid phases of the slurry, laboratory experiments have also been carried out with different organic compounds, such as organic dyes and pharmaceuticals, all of which are used in photocatalysis research, as an example of water contaminants from slurry.

The methodology used has been the same as that employed in the treatment of the aqueous phase of the slurry. Table 2 below shows the different organic compounds studied, along with the optimized parameters for carrying out their degradation.

**Table 2. Summary of the parameters used for irradiation with the different selected organic compounds**

| **Organic Compound** | **Concentration (mg/L)** | **Wavelength (nm)** | **Speed (mm/s)** | **Power (W)** | **Frecuency (kHz)** | **Stirring Speed (rpm)** | **Minimum Irradiation Time (minutes)** | **Volume (ml)** |
|---|---|---|---|---|---|---|---|---|
| **Congo Red** | 10 | 355 | 1000 | 3,6 | 20 | 300 | 4 | 3 |
| **Methyl Orange** | 10 | 355 | 1000 | 3,6 | 20 | 300 | 4 | 3 |
| **Rhodamine B** | 10 | 355 | 1000 | 2,5 | 20 | 300 | 2 | 3 |
| **Ciprofloxacin** | 25 | 355 | 1000 | 3,3 | 20 | 300 | 0,5 | 3 |
| **Amoxicilin** | 20 | 355 | 1000 | 3,6 | 20 | 300 | 30 | 3 |
| **Diclofenac** | 20 | 355 | 1000 | 3,6 | 20 | 300 | 15 | 3 |
| **Dexametasone** | 20 | 355 | 1000 | 2,5 | 20 | 300 | 2 | 3 |
| **Ibuprophen** | 10 | 355 | 1000 | 2,5 | 20 | 300 | 20 | 3 |
| **Paracetamol** | 10 | 355 | 1000 | 3,3 | 20 | 300 | 20 | 3 |
| **Intervals** | **10-25** | **260-540** | **10-10000** | **>1,7** | **<200** | **30-1.000** | **0,5 - 30** | **3** |

Table 2 shows the concentrations used for the experimental studies (10-25 mg/L) in solutions with ultrapure Milli-Q water. The wavelength used in the UV laser was 355 nm; however, it is considered that the entire ultraviolet spectrum range is viable for contaminant degradation. It has also been observed that the scanning speed is not a determining parameter, although it is more optimal the faster the scanning is performed. The laser equipment power used for these experiments ranged from 1.7 to 3.6 W. Higher powers have also been tested with good results, but the solution overheats excessively. However, in the case of treating large volumes, increasing the power by greater orders of magnitude would be necessary. The optimal frequencies for degradation in these experimental conditions would be values lower than 200 kHz, with lower frequencies yielding the best results for degradation. As for the minimum irradiation time, it was considered as the time when the achieved degradation (measured through the decrease in absorbance values) was greater than 70%, with these values being highly variable depending on the organic compound treated, ranging from 30 seconds to 30 minutes. Finally, the irradiated volume in this experimentation was 3 ml.

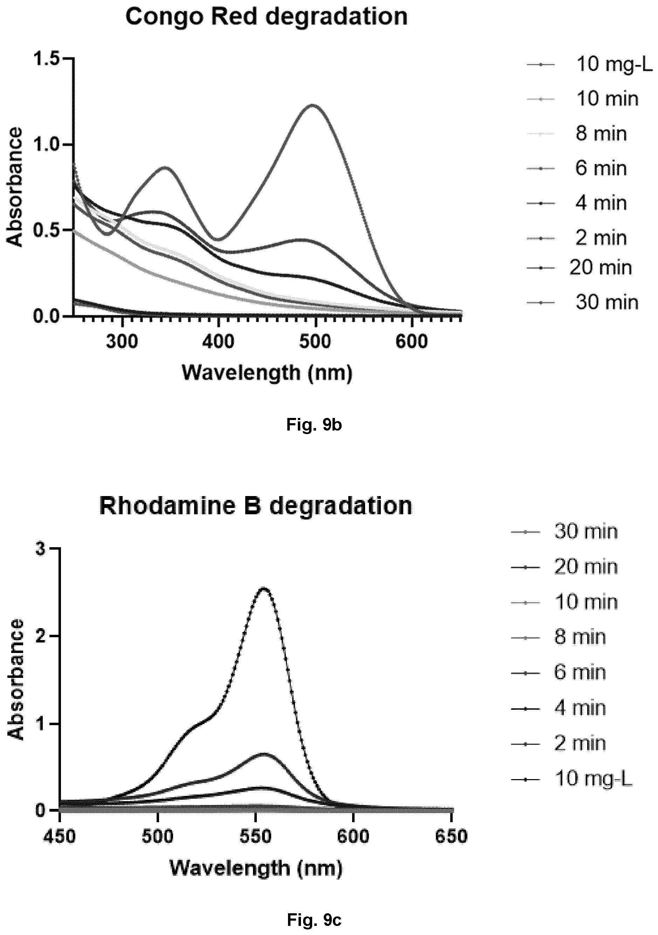

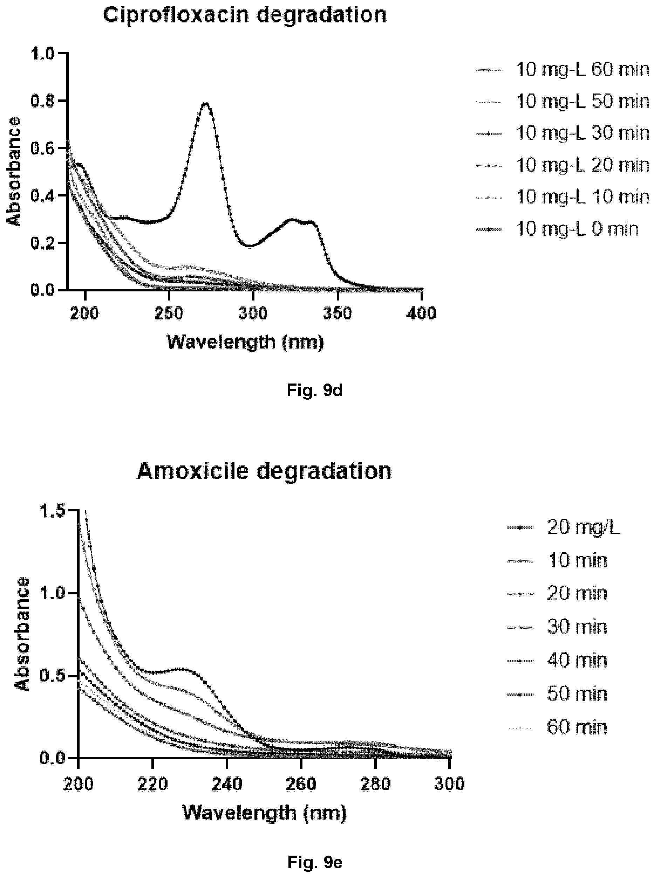

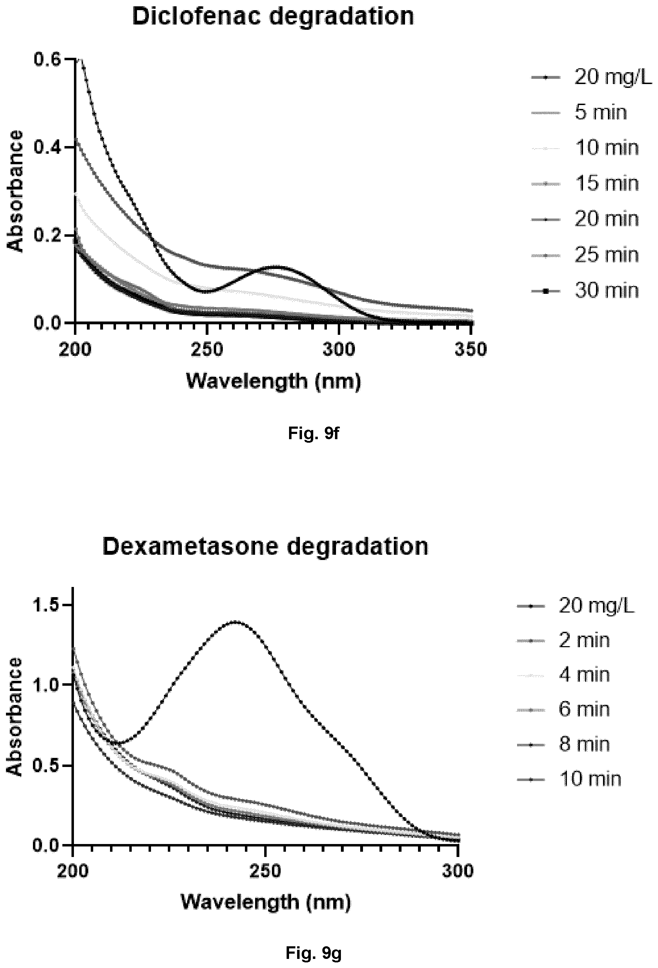

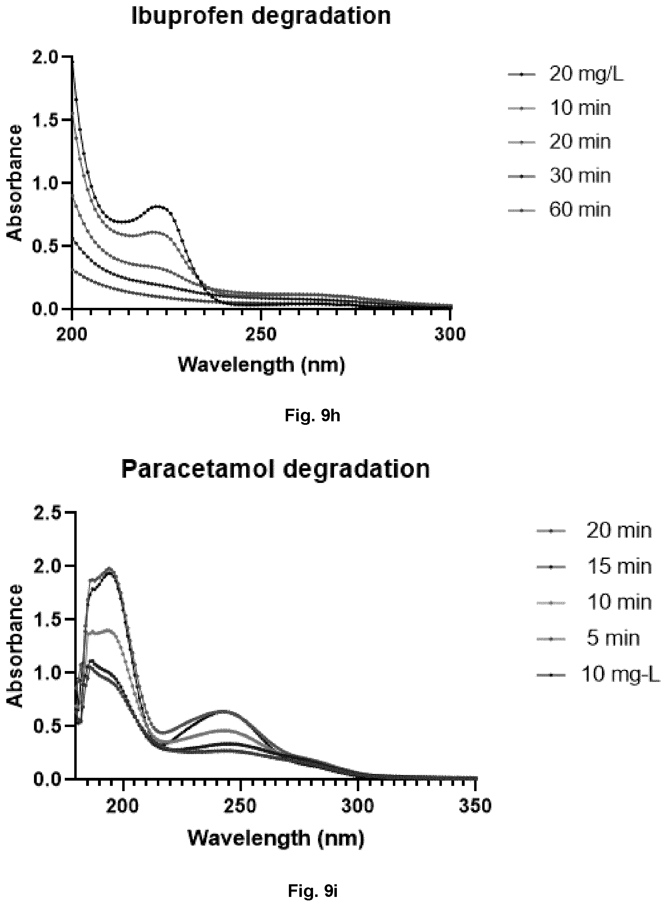

In Figure 9, the absorbance spectra of the different organic compounds listed in Table 2, treated at different irradiation times, can be observed.

## Claims

1. A process for the treatment and valorization of slurry, comprising:
- subjecting a flow of slurry to infrared laser irradiation; wherein the infrared irradiation is carried out with a wavelength between 780 nm and 25 µm, a power greater than 20 watts, a pulse frequency greater than 1 kHz, and a scanning speed greater than 10 mm/s, for a time ranging between 30 and 90 minutes.

2. The process according to claim 1, wherein the flow of slurry is subjected to homogenization prior to infrared laser irradiation.

3. The process according to any one of claims 1 or 2, wherein the flow of slurry is subjected to infrared laser irradiation under stirring.

4. The process according to any one of claims 1 to 3, wherein, prior to infrared laser irradiation, the flow of slurry is subjected to physical separation of the liquid phase and the solid and/or semi-solid phase; and wherein only the solid and/or semi-solid phase is subjected to infrared laser irradiation, without the liquid phase.

5. The process according to claim 4, wherein the solid and/or semi-solid phase of the slurry flow previously separated is subjected to drying before being subjected to infrared laser irradiation.

6. The process according to claim 5, wherein the solid and/or semi-solid phase is subjected to mechanical compaction treatment, after being dried and before being subjected to infrared laser irradiation.

7. The process according to any one of claims 4 to 6, wherein the separated liquid phase is subjected to decontamination and purification, under stirring between 30 and 1,000 rpm, by irradiating an ultraviolet laser of a wavelength between 260 and 540 nm, with a pulse frequency of less than 200 kHz, a power greater than 1.7 watts, and a scanning speed between 10 and 10,000 mm/s, for a time ranging between 30 seconds and 30 minutes.

8. The process according to any one of claims 1 to 7, wherein the infrared laser irradiation is carried out in a controlled atmosphere.

9. The process according to claim 8, wherein the controlled atmosphere is an inert or reducing atmosphere with a gas selected from argon and nitrogen, within an air chamber.
